# EUROPEAN PATENT SPECIFICATION

(11) **EP 1 922 779 B1**
(45) Date of publication and mention of the grant of the patent: **09.07.2014**
(21) Application number: 06791922.5
(22) Date of filing: 07.09.2006
(51) Int. Cl.: H01M 8/10, H01M 8/18, H01M 8/04, B64D 13/00, H01M 8/06, B64D 13/06, B64D 41/00

(54) **FUEL CELL SYSTEM FOR THE SUPPLY OF DRINKING WATER AND OXYGEN**
BRENNSTOFFZELLENSYSTEM ZUR VERSORGUNG MIT TRINKWASSER UND SAUERSTOFF
SYSTEME DE PILE A COMBUSTIBLE DESTINE A UNE ALIMENTATION EN EAU POTABLE ET EN OXYGENE

(30) Priority: 08.09.2005 DE 102005042749; 08.09.2005 US 715277 P; 18.01.2006 DE 102006002470; 18.01.2006 US 759888 P
(43) Date of publication of application: 21.05.2008
(73) Proprietor: Airbus Operations GmbH, 21129 Hamburg (DE)
(72) Inventor: HOFFJANN, Claus, 21147 Hamburg (DE); SCHULDZIG, Hansgeorg, 21635 Jork (DE)
(74) Representative: Kopf, Korbinian Paul
(86) International application number: PCT/EP2006/008752
(87) International publication number: WO 2007/028622

(56) References cited:
- EP-A- 0 718 904
- WO-A2-02/02846
- DE-A1- 3 345 956
- US-A- 3 180 813
- US-A- 5 506 066
- US-A1- 2002 017 463
- US-A1- 2003 064 260
- US-A1- 2004 180 249

## Description

This application claims the benefit of the filing date of United States Provisional Patent Applications No. 60/715 277 filed, September 8, 2005 and No. 60/759 888 filed January 18, 2006 and of German Patent Applications No. 10 2005 042 749.9 filed September 8, 2005 and No. 10 2006 002 470.2 field January 18, 2006, the disclosures of which are hereby incorporated herein by reference.

The present invention relates to a fuel cell system for the supply of drinking water and oxygen. In particular, the present invention relates to a fuel cell system for the supply of drinking water and oxygen for an aircraft or aerodyne, an aircraft comprising a fuel cell system for the supply of drinking water and oxygen, and the use of a corresponding fuel cell system for the supply of drinking water and oxygen in an aircraft.

In conventional civil aircraft, drinking water for supplying to passengers is stored in storage tanks on board, and is distributed from these storage tanks to passengers during the flight. This means that the entire water volume required must be filled into the tanks before the flight and lifted by the power of the engines at flight altitude.

In addition, at flight altitude the passengers require adequate air for breathing, which is supplied by the air-conditioning system of the aircraft. The air-conditioning system in turn draws its compressed air from a compressor stage of the engines, as a result of which power from the engines is required for obtaining compressed air.

In order for the passengers to be able to move freely in the cabin, aircraft are provided with what is referred to as a pressurised cabin, which maintains the air pressure at a level which is tolerable for the human organism. As a rule, such a pressurised cabin is operated at a pressure level of about 750 hPa. This pressure level corresponds approximately to the air pressure at an altitude of 2,450 m above sea level. With an average external pressure at 10,000 m altitude of about 260 hPa, this means a pressure differential of about 490 hPa between the external pressure and the pressure maintained in the cabin. The pressure differential must be accommodated or absorbed structurally by the cabin.

For modem civil aircraft, an average flight altitude of about 12,000 m is striven for. At this altitude, the average external air pressure is about 190 hPa. From this, with a conventional design layout a differential pressure between the cabin pressure and external air pressure of about 560 hPa would be derived. This pressure differential requires additional measures for reinforcing the structure of the cabin, which in turn means additional weight and therefore an increase in overall fuel consumption.

There may be a need object of the invention is to provide an efficient system for the supply of drinking water and oxygen to a vehicle.

This need may be met by a fuel cell system for the supply of drinking water and oxygen for an aircraft or aerodyne, an aircraft comprising a fuel cell system for the supply of drinking water and oxygen, and the use of a corresponding fuel cell system for the supply of drinking water and oxygen in an aircraft according to the features of the independent claims.

According to an embodiment of the present invention, the need indicated above may be met by a fuel cell system for the supply of drinking water and oxygen to an aircraft, said fuel cell system comprising a fuel cell and an electrolysis cell. The electrolysis cell further comprises an air cathode and is coupled to the fuel cell. The fuel cell and the electrolysis cell are designed in such a way that a power requirement of the electrolysis cell is covered by a power delivery from the fuel cell.

A basic idea of an exemplary embodiment of the invention may be that a fuel cell and an electrolysis cell, which comprises an air cathode, i.e. forms an electrolysis cell with air cathode, are connected together to form a fuel cell system, whereby the fuel cell may be used as an energy supply of the electrolysis cell. Preferably, the fuel cell may be designed in relationship to the electrolysis cell in such a way that the fuel cell covers the entire power requirement of the electrolysis cell.

The fuel cell system according to an exemplary embodiment of the invention may create a system in which different demands on the cabin supply of an aircraft may be integrated. On the one hand, such a high-integratibility system may be used to generate pure oxygen. This is produced by the electrolysis cell, and may serve to increase the oxygen partial pressure, i.e. the percentage distribution of the oxygen and nitrogen is altered in favour of the oxygen, in the respiration air of the passengers and crew of a vehicle, such as an aircraft. By this, the possibility may be created to reduce the cabin pressure, which in turn may counteract the tendencies described in the possible event of an increase in the flight altitude, since fewer mechanical stresses are imposed on the cabin, as a result of which it may be possible to achieve a weight saving with regard to structural components. For example, by increasing the oxygen partial pressure for a cabin air pressure, a value of about 600 hPa may be achieved, which may mean that, with the conventional pressure differential described heretofore, of about 490 hPa, a flight altitude of about 15,500 m may be achieved without additional structural reinforcement and the associated weight increase. Moreover, while retaining the flight altitudes usual today, the structure of the cabin may be made lighter accordingly. Both may contribute to substantial fuel savings.

Alternatively, it may also be possible for the comfort of the passengers to be increased while retaining a cabin pressure conventional hitherto of 750 hPa, in that the oxygen partial pressure is increased and, simultaneously, the carbon dioxide partial pressure (CO₂ partial pressure is reduced). Increased CO₂ values in the respiration air are regarded medically as one possible cause of the occurrence of headaches and malaise, as well as for the appearance of a slightly increased potential for aggression among passengers.

It may also be possible that, in order to save weight, drinking water might not need to be stored in storage tanks and take to flight altitude, but could be composed from hydrogen and oxygen in a fuel cell, and so made available for consumption by the passengers, i.e. only hydrogen would have to be stored. Accordingly, one advantage of the invention may be that the fuel cell system would make possible the production of fresh water for the supply of water consumers found on board today's vehicles, in particular aircraft. Such water consumers are, for example, washing areas, toilets, and on-board kitchens. Possible future water consumers too, however, such as showers air humidifying systems, and automatic drinks dispensers, may be provided with fresh water by a fuel cell system according to the invention. The fuel cell system may in particular lead to a reduction of the water load at aircraft takeoff and during climbing.

This may lead to substantial weight savings, and therefore to a reduced power requirement, in particular when climbing but in other flight phases also, as a result of which the fuel requirement may be substantially reduced. It may also be possible for a defined consistent water quality to be provided.

Further objects, embodiments, and advantages of the invention can be derived from the further independent claims and the dependent claims.

Examples of embodiments of the fuel cell system are described in greater detail hereinafter.

In an exemplary embodiment, the fuel cell comprises an anode side and a cathode side, and the electrolysis cell comprises an anode side and a cathode side. Moreover, the cathode side of the electrolysis side is coupled to the cathode side of the fuel cell.

With such a coupling, it may be possible for moist air to be conducted to the cathode side of the fuel cell directly from the cathode side of the electrolysis cell as educt gas, or to be mixed into the air flow required for the cathode reaction. It may also be made possible for the cathode waste air from the electrolysis cell to be condensed, and the product water formed from the cathode reaction to be conducted to the cathode air flow of the fuel cell.

On the cathode side of the electrolysis cell, in this situation, preferably a reaction takes place in accordance with the reaction equation

½ *O₂ (air)* + *2H⁺ (membrane) + 2e⁻ -> H₂O (liquid)*

while on the anode side of the electrolysis cell a reaction takes place preferably in accordance with the reaction equation

*H₂O (liquid)* → *1*/*2O₂ (ultra pure)* + *2H⁺ (membrane) +2e⁻.*

In an alternative exemplary embodiment of the fuel cell system, the fuel cell comprises an anode side and a cathode side, and the electrolysis cell comprises an anode side and a cathode side. Moreover, the cathode side of the electrolysis cell is coupled to the anode side of the fuel cell.

By such linking of the electrolysis cell with the fuel cell, it may be possible to reduce the external hydrogen requirement of the electrolysis cell, since the hydrogen passing through the membrane of the electrolysis cell onto the cathode side may be conducted to the anode side of the fuel cell.

In another exemplary embodiment the fuel cell is arranged in such a way that hydrogen or a reformate gas can be conducted on the anode side.

With such an arrangement it may be possible for hydrogen or a reformate gas composed of hydrogen and carbon dioxide as a combustion gas to be conducted on the anode side.

In a further exemplary embodiment of the fuel cell system, the electrolysis cell is arranged in such a way that air from a cabin of the vehicle is conductable to the cathode side.

With this arrangement it may be possible that hydrogen from the electrolysis process penetrating through a membrane of the electrolysis cell on the cathode side combines with the oxygen present in the cabin air, and therefore moistens the cabin air, which may be conducted as an educt gas to the fuel cell.

In another exemplary embodiment, the fuel cell system also comprises a heat exchanger. The heat exchanger is arranged in such a way that it cools air conducted from the cathode side of the fuel cell.

This may make it possible for the cathode-side waste air of the fuel cell to be cooled, as a result of which the water produced in the fuel cell may be condensed. This water may be stored in a water tank and may subsequently be used as fresh water for water consumers in the aircraft.

In a further exemplary embodiment, the fuel cell system further comprises an additional heat exchanger, wherein the additional heat exchanger is arranged in such a way that it cools air conducted from the anode side of the electrolysis cell.

As a result, it may be possible to undertake a first oxygen/water separation with the air derived from the anode side of the electrolysis cell, i.e. to carry out a first drying of this derived or discharged air. The water which is collected in this process may be conducted back into the anode side of the electrolysis cell.

In another exemplary embodiment, the fuel cell system further comprises a cooling circuit, which is coupled to the fuel cell in such a way that it cools the fuel cell.

Such a cooling circuit may be operated and used in an aircraft, for example, with the outside or ambience air as the cooling medium, in order to carry out any cooling of the fuel cell which may possibly be necessary.

In another exemplary embodiment of the fuel cell system, the fuel cell is a low-temperature fuel cell, preferably a proton exchange membrane fuel cell (PEMFC). According to the invention, the fuel cell can alternatively also be designed as any other known type of fuel cell. Such a low-temperature fuel cell can be designed in such a way that it can be operated, for example, in a temperature range between 60 °C and 80 °C.

In another exemplary embodiment of the fuel cell system, the fuel cell is the fuel cell of a high-temperature PEM fuel cell. According to the invention, as an alternative the fuel cell can also be designed as any other known type of fuel cell. Such a high-temperature PEM fuel cell can be designed in such a way that it can be operated, for example in a temperature range between 120 °C and 300 °C.

In another exemplary embodiment of the fuel cell system, the electrolysis cell is designed as a polymer membrane electrolysis cell with a catalyst. As an alternative, the electrolysis cell can be designed as another type of electrolysis cell which is adapted to the temperature level of the downstream fuel cell.

In another exemplary embodiment, the fuel cell system further comprises a plurality of fuel cells and a plurality of electrolysis cells. Due to the provision of a plurality of fuel cells and electrolysis cells, it may be become possible to provide any desired performance with regard to energy or oxygen.

In another exemplary embodiment of the fuel cell system, the fuel cell and the electrolysis cell are connected to form a stack, and the electrolysis cell is supplied with power directly from the fuel cell.

In this situation, the electrolysis cell(s) and fuel cell(s) may become one single stack, i.e. are combined to one mechanical association of individual components, which can lead to a saving of cable material.

In another exemplary embodiment of the fuel cell system, a power ratio between the fuel cell and the electrolysis cell is selected in such a way that a power emission from the fuel cell corresponds precisely to a power requirement of the electrolysis cell. Expressed another way, the power output from the fuel cell is selected in such a way that the fuel cell can only supply the electrolysis cell and does not produce any excess power, i.e. the electrical output from the fuel cell is matched precisely to the electrical power requirement of the electrolysis cell and pure oxygen and water production takes place. The control of the system is effected in this case preferably only via the media introduced, i.e. water, hydrogen, and cabin air, as a result of which it may be possible to save on electrical regulators and transformers to adjust the energy delivered from the fuel cell to the onboard network. If such a fuel cell system is compiled or integrated to form a single stack, in this way all external connections are saved, which makes it possible to save on cable material.

According to another exemplary embodiment of the fuel cell system, a power output ratio between the fuel cell and the electrolysis cell is selected in such a way that a power emission from the fuel cell corresponds precisely to a power requirement of the electrolysis cell and all necessary ancillary appliances of the fuel cell system. Expressed another way, the fuel cell produces an excess in relation to the power consumption of the electrolysis cell, which is large enough to operate all external consumers of the fuel cell system such as pumps or compressors, i.e. the fuel cell system can cover the inherent energy requirement. It may also be possible to supply its reformer with water in order to produce combustion gas for fuel cells. This design may also make it possible to do without electrical regulators and transformers for adjusting the energy delivered from the fuel cell to the onboard network.

According to another exemplary embodiment of the fuel cell system, a power ratio between the fuel cell and the electrolysis cell is selected in such a way that a power output from the fuel cell is higher than a power requirement of the electrolysis cell and all required ancillary devices of the fuel cell system. Preferably, the fuel cell system comprises a power inverter and a voltage converter or transformer, whereby the inverter and transformer are designed in such a way that power from the fuel cell is fedable into an onboard network of the vehicle.

This may make it possible for energy to be conducted to an onboard network of the vehicle. A limiting parameter in this context may lie in the moisture requirement of the fuel cell, which moisture requirement may be covered by the electrolysis cell.

A first exemplary aspect of the invention may be seen in the fact that an arrangement is created for the production of oxygen and fresh water for the onboard requirement of aircraft, whereby the arrangement consists of or comprises an electrolysis cell and a fuel cell, wherein the power ratio to one another is selected in such a way that the electrical power requirement of the electrolysis cell is covered by the provision of electrical energy by the fuel cell, and, additionally, the power requirement of all required ancillary devices is completely covered, and no power at all is fed into the onboard network of the aircraft. In this situation, the electrolysis cell serves to produce the oxygen by electrolytic splitting at the anode of water to hydrogen and oxygen and to humidify the downstream fuel cell by recombination of hydrogen with the oxygen contained in the air introduced on the cathode side from the cabin of the aircraft to produce water. Preferably, the fuel cell is a low-temperature fuel cell of the PEMFC type and/or the electrolysis cell is an electrolysis cell on the basis of a polymer membrane with catalyst. The electrolysis cell further comprises an air cathode, i.e. is designed as an electrolysis cell with air cathode.

In an exemplary embodiment of this first aspect, electrolysis cells and fuel cells can be combined to form a stack, whereby the electrolysis cells are supplied directly with energy from the fuel cells, and the fuel cells are supplied directly with the educt gas "moist air" on the cathode side from the electrolysis cells, and the combustion gas conducted to the fuel cells on the anode side consists of hydrogen or a reformate gas formed from hydrogen and carbon dioxide.

A second exemplary aspect of the invention may be seen in the fact that an arrangement for the production of oxygen and fresh water for the onboard requirement of aircraft is created, wherein the arrangement consists of or comprises an electrolysis cell and a fuel cell, of which the power ratio to one another is selected in such a way that the electrical power requirement of the electrolysis cell is covered by electrical energy from the fuel cell, and, additionally, a power excess is fed into the onboard network of the aircraft. In this situation, the electrolysis cell serves to produce the oxygen by electrolytic splitting at the anode of water to hydrogen and oxygen, and to humidify the downstream fuel cell by recombination of the hydrogen with the oxygen contained in the air introduced on the cathode side from the cabin of the aircraft, to form water. Preferably, the fuel cell is a low-temperature fuel cell of the PEMFC type and/or the electrolysis cell is an electrolysis cell on the basis of a polymer membrane with catalyst. The electrolysis cell further comprises an air cathode, i.e is designed as an electrolysis cell with air cathode.

In one exemplary embodiment of this second aspect, electrolysis cells and fuel cells can be combined in a stack, wherein the electrolysis cells are supplied with energy directly from the fuel cells, and the fuel cells are supplied directly with the educt gas "moist air" on the cathode side from the electrolysis cells, and the combustion gas conducted to the fuel cells on the anode side consists of hydrogen or a reformate gas formed from hydrogen and carbon dioxide.

In a further exemplary embodiment of this second aspect, an inverter and voltage transformer can be provided for the energy infeed into the onboard network, which are connected in between the fuel cell and the infeed point and undertake an adjustment of the electrical energy from the fuel cell to the voltage, type current, and frequency of the onboard network.

A further exemplary aspect of the invention can be seen in that the invention creates a fuel cell system which consists of two parts with modes of effect. In this situation, the first part is a fuel cell operated with air and hydrogen, preferably a low-temperature fuel cell, such as a proton exchange membrane fuel cell (PEM fuel cell), while the second part is an electrolysis cell, preferably likewise a low-temperature electrolysis cell, such as a proton exchange membrane electrolysis cell. In principle the fuel cell and electrolysis cell are similar. The main difference lies only in the type of the catalyst. The size ratio, or in other words the power output ratio, between the electrolysis cell and the fuel cell is determined in this situation from the type of intended application, i.e. whether the fuel cell is intended to supply only the electrolysis cell or also additional ancillary devices of the fuel cell system with electrical power, or whether the fuel cell is additionally intended to feed an onboard network. The electrolysis cell further comprises an air cathode, i.e. is designed as an electrolysis cell with air cathode.

A further exemplary aspect of the invention can be seen in the fact that an arrangement for the production of oxygen and fresh water is provided for the requirement on board aircraft, whereby the arrangement consists of or comprises an electrolysis cell and a fuel cell, wherein the power ratio to one another is selected in such a way that the electrical power requirement of the electrolysis cell, and additionally of all required ancillary appliances, is fully covered by the fuel cell, and no power at all is fed into the onboard network of the aircraft. In this context, the electrolysis cell may serve to produce the oxygen by electrolytic splitting at the anode from water to hydrogen and oxygen, whereby the hydrogen produced is conducted to the anode side of the downstream fuel cell. Preferably, the fuel cell is a low-temperature fuel cell of the PEMFC type, which operates in a temperature range of between about 60 °C and 80 °C or a high-temperature fuel cell of the PEMFC type, which operates in a temperature range between about 120 °C and 300 °C. Furthermore, the electrolysis cell can be an electrolysis cell on the basis of a polymer membrane with catalyst.

In an exemplary embodiment of this aspect, electrolysis cells and fuel cells can be combined to form a stack, whereby the electrolysis cell is supplied with energy directly from the fuel cells, and the combustion gas conducted on the anode side to the fuel cells consists of hydrogen or a reformate gas of hydrogen and carbon dioxide.

An additional exemplary aspect of the invention can be seen in the fact that an arrangement is provided for the production of oxygen and fresh water for the requirement on board aircraft, whereby the arrangement consists of or comprises an electrolysis cell and a fuel cell, wherein the power ratio to one another is selected in such a way that the electrical power requirement of the electrolysis cell is covered by the provision of electrical energy by the fuel cell and, additionally, a power surplus is fed into the onboard network of the aircraft. A division into two different systems is possible: One with air humidification for the fuel cell by recombination of the hydrogen created with air oxygen from the cabin, and one with moisture heat exchanger for the air humidification of the fuel cell, but for this with the conducting of the hydrogen produced to the fuel cell anode. These cases can be considered separately. As an alternative, the fuel cell may be a fuel cell of another type than a PEMFC, wherein this other fuel cell type can be operated on the anode side with the fuel hydrogen or reformate gas. Furthermore, the electrolysis cell can be an electrolysis cell on the basis of a polymer membrane with catalyst, or another electrolysis cell type which is adjusted in temperature level of the downstream fuel cell.

In an exemplary embodiment of this additional aspect, electrolysis cells and fuel cells can be combined to form a stack, wherein the electrolysis cells are supplied with energy directly from the fuel cells, and the combustion gas conducted to the fuel cells on the anode side consists of hydrogen or a reformate gas formed of hydrogen and carbon dioxide. Furthermore, an inverter and a voltage transformer are preferably provided for the energy infeed into the onboard network, these being connected between the fuel cell and the infeed point, and undertake an adjustment of the electrical energy from the fuel cell to the voltage, type current, and frequency of the onboard network.

Reference may be made to the fact that features or steps which have been described with regard to one of the foregoing exemplary embodiment or with regard to one of the foregoing exemplary aspects can also be used in combination with other features or steps of other exemplary embodiment or exemplary aspects described heretofore.

The invention is described hereinafter in greater detail on the basis of embodiment examples, making reference to the drawings.
Fig 1 shows a schematic representation of the fuel cell system according to an exemplary embodiment of the invention.
Fig. 2 shows a diagrammatic representation of the fuel cell system according to a further exemplary embodiment of the invention.

In the following description of the figures, the same or similar reference signs are used for the same or similar elements.

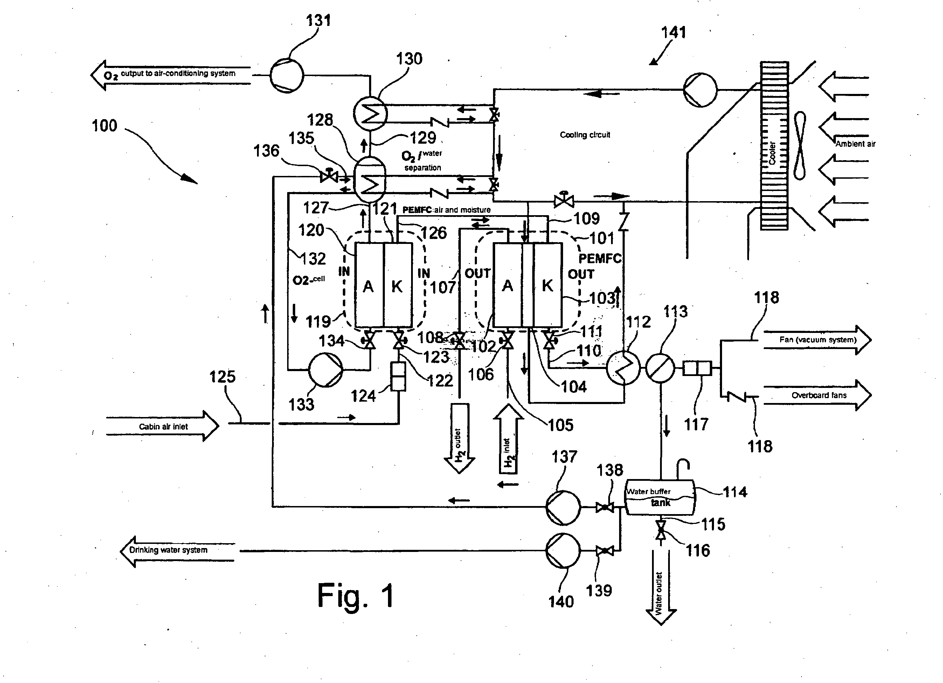

Fig. 1 shows a diagrammatic representation of a fuel cell system for the supply of an aircraft with drinking water and oxygen according to one exemplary embodiment of the present invention. As can be seen from Fig. 1, the fuel system 100 comprises a fuel cell 101 with an anode side 102 and a cathode side 103. The fuel cell 101 is designed as a proton exchange membrane fuel cell (PEMFC). Represented diagrammatically between the anode side 102 and the cathode side 103 is a membrane 104. The anode side 102 of the fuel cell 101 represents a feed line 105 with a valve 106 and a discharge line 107 with a valve 108. The cathode side 103 of the fuel cell 101 comprises a feed line 109 and a discharge line 110 with a valve 111. For preference, the feed line 109 can be additionally coupled to an additional air delivery line, not represented in Fig. 1. The discharge line 110 is coupled to a first heat exchanger 112 of the fuel cell system 100. The first heat exchanger 112 is also coupled to a condensate discharger 113, which on the one hand is connected to a storage tank 114 for the storage of water which is condensed in the first heat exchanger 112. The storage tank 114 is provided with a discharge line 115, which, by means of a valve 116, serves as an outflow in the event of there being too much water in the storage tank 114. In addition, the condensate discharger 113 is connected via a filter 117 to an outlet 118, via which outgoing air can leave the aircraft, i.e. a pressurised cabin of the aircraft.

Furthermore, the fuel cell system 100 comprises an electrolysis cell 119 with an anode side 120 and a cathode side 121. The cathode side 121 of the electrolysis cell 119 is designed as what is referred to as an air cathode, and comprises a feed line 122, which is coupled via a valve 123 and a filter 124 to an inlet 125, by which air can be introduced from the pressurised cabin into the cathode side 121 of the electrolysis cell 119. A discharge line 126 from the cathode side 121 of the electrolysis cell 119 is coupled to the feed line 109 of the cathode side 103 of the fuel cell 101. A discharge line 127 from the anode side 120 of the electrolysis cell 119 is coupled to a second heat exchanger 128, which comprises a gas discharge line 129, which is coupled via a third heat exchanger 130 and a pump 131 to an outlet, by which oxygen can be introduced into the pressurised cabin. The second heat exchanger 128 serves to provide an oxygen/water separation of the water/oxygen mixture on the anode side 120 of the electrolysis cell 119. A water discharge line 132 of the second heat exchanger 128 is coupled via a circulation pump 133 and a valve 134 to an inlet on the anode side 120 of the electrolysis cell 119. Furthermore, the second heat exchanger 128 comprises a water inlet 135, which is coupled via a valve 136, a pump 137, and a further valve 138 to an outlet of the storage tank 114. The outlet of the storage tank 114 is additionally connected via a valve 139 and a pump 140 to a drinking water system of the aircraft.

Furthermore, the fuel cell system 100 comprises a cooling circuit 141, which is connected to air outside the aircraft. The cooling circuit 141 serves to cool the first heat exchanger 112, the second heat exchanger 128, the third heat exchanger 130, and the fuel cell 101.

The function of the fuel cell system represented in Fig. 1 is described in greater detail hereinafter.

Water is conducted to the electrolysis cell 119 from the storage tank 114, which serves as a water storage holder, and/or from a water circuit via the second heat exchanger 128, by the pump 133. By a voltage imposed at the electrolysis cell 119, this water is split into 2H and O, i.e. hydrogen and oxygen. The oxygen atoms acquired in this way form oxygen molecules O₂ and are carried out via the second heat exchanger 128 and conducted via a ventilation arrangement of the air-conditioning system of the aircraft, which then provides breathing air with increased oxygen proportion for the cabin and the passengers.

On the cathode side, the electrolysis cell 119 is provided with discharge air from the cabin. The cabin air is conveyed due to the differential pressure present in the system as a whole between the cabin and the outside air. At the cathode 121 of the electrolysis cell 119, the hydrogen from the electrolysis process, which has passed through the membrane of the electrolysis cell 119 from the anode 120 to the cathode 121, combines with the oxygen contained in the cabin air to form water, which leads to a humidification of the cabin air flowing through the electrolysis cell. The moist air from the electrolysis cell 119, which essentially contains N₂, O₂, and H₂O, is now conducted to the cathode 103 of the fuel cell 101. In addition, if an additional air inlet line is coupled to the line 109, additional air can be conducted to the cathode side of the fuel cell 101. With simultaneous imposition of hydrogen at the anode 102, with the imposition of an electrical load, i.e. an consumer of electrical energy, which is provided, for example, by the electrolysis cell, additional water is formed. Subsequently the entire water portion from the fuel cell discharge air is condensed out in the first heat exchanger 112. Part of the water which is condensed out is conducted to the anode side of the electrolysis cell via the tank 114 and the pump 137, in order to make up the water loss there again, which takes place in accordance with the reaction equation

*H₂O (liquid) → 1*/*2O₂ (ultra pure)* + *2H*⁺ *(membrane) +2e⁻.* The anodic water loss is equal to the cathodic water production.

To cool the system described, a cooling circuit is used, which uses the outside air as the primary cooling medium, and as a secondary cooling medium pumps a cooling fluid via the piping system represented in Fig. 1 to the corresponding heat exchangers. The heat exchangers principally required are on the one hand a cooler, which discharges the waste heat from the cooling circuit to the outside air, the third heat exchanger 130, which undertakes a drying of the oxygen, up to a residual moisture content which may possibly be required, for the air-conditioning system, the second heat exchanger 128, which has the effect of cooling the anode water circuit, and the first heat exchanger 112, which has the effect of condensation of the air humidity present in the cathode discharge air of the fuel cell 101. The condensate occurring at the first heat exchanger 112 is conducted away via the condensate discharge line 113 and conducted to the storage tank 114, which serves as a buffer tank for the intermediate storage tanks, from where it is conducted either as drinking water for consumption by the passengers or serves as a water resource for the electrolysis cell 119.

In addition to this, the cooling circuit can also be provided with additional heat exchangers, which take on the heating functions for various system parts in the aircraft, such as protecting water tanks against freezing.

As an alternative to the fluid cooling medium described heretofore, a gaseous cooling medium can be used, a combination of a fluid and a gaseous cooling medium, or a cooling medium which changes its aggregate state under heating from fluid to gaseous and under cooling from gaseous to fluid. In the case of the cooling medium which changes its aggregate state, the condensation temperature and the boiling temperature are selected in such a way that they lie between the temperatures of the high-temperature side and the low-temperature side of the heat exchanger, i.e. that the aggregate state of the cooling medium changes in the heat exchanger.

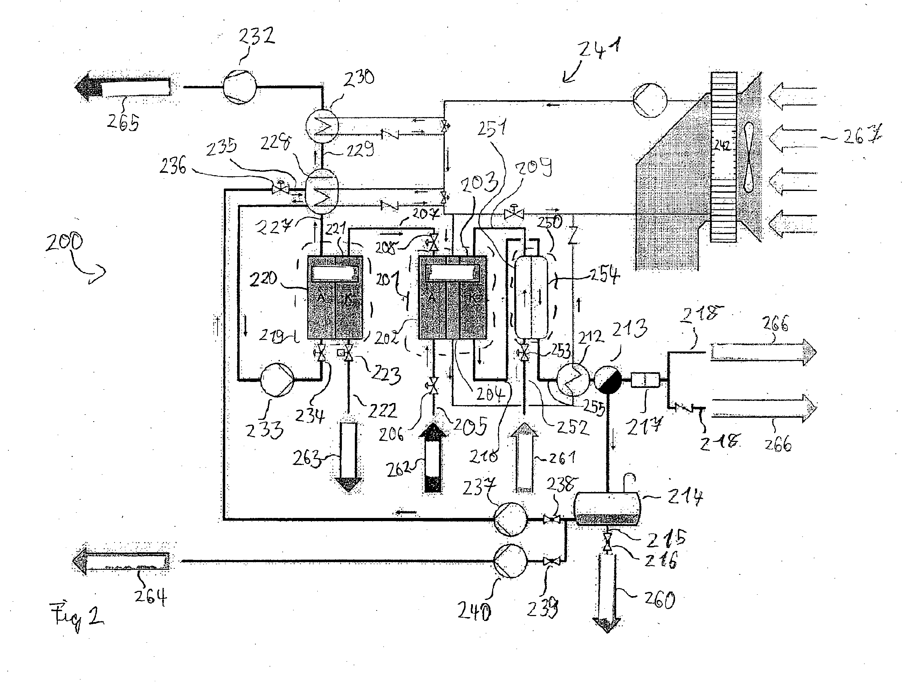

**Fig. 2** shows a diagrammatic representation of a fuel cell for the supply of an aircraft with drinking water and oxygen in accordance with a further exemplary embodiment of the present invention. In distinction to the exemplary embodiment from Fig. 1, however, in the exemplary embodiment from Fig. 2 a cathode side of an electrolysis cell is coupled to an anode side of a fuel cell. As can be seen from Fig. 2, the fuel cell system 200 exhibits a fuel cell 201 with an anode side 202 and a cathode side 203. The fuel cell 201 is designed as a proton exchange membrane fuel cell (PEMFC). Represented in diagrammatic form between the anode side 202 and the cathode side 203 is a membrane 204. The anode side 202 of the fuel cell 201 comprises a first delivery line 205 with a valve 206 and a second delivery line 207 with a valve 208.

The cathode side 203 of the fuel cell 201 comprises a delivery line 209 and a discharge line 210, which are both coupled to a moisture-heat exchanger 250 in such a way that a moisture and/or heat exchange takes place between an air intake on the cathode side 203 and an air discharge on the cathode side 203. For this purpose, the delivery line 209 of the cathode side is coupled to a first side 251 of the moisture-heat exchanger 250, and at the same time represents a first discharge line for the moisture-heat exchanger 250. A first delivery line 252 of the moisture-heat exchanger 250 on the first side of the moisture-heat exchanger 250 is coupled via a valve 253 to the passenger cabin in such a way that cabin air can be conducted to the moisture-heat exchanger 250. Furthermore, for the moisture and/or heat exchange of the intake air of the cathode side 203 and the discharge air of the cathode side 203, the discharge line 210 of the cathode side 203 is coupled to a second side 253 of the moisture-heat exchanger 250. A second discharge line 255 of the second side 254 of the moisture-heat exchanger 250 is coupled to a first heat exchanger 212 of the fuel cell system 200.

The first heat exchanger 212 is coupled to a condensate discharge line 213, which on the one hand is connected to a storage tank 214 for the storage of water which is condensed in the first heat exchanger 212. The storage tank 214 is provided with a discharge line 215, which, by a valve 216, serves as an outflow in the event of there being too much water in the storage tank 214. Furthermore, the condensate discharge line 213 is connected via a filter 217 to an outlet 218, via which outgoing air can leave the aircraft, i.e. a pressurised cabin of the aircraft.

Furthermore, the fuel cell system 200 comprises an electrolysis cell 219 with an anode side 220 and a cathode side 221. The cathode side 221 of the electrolysis cell 219 is designed as what is known as an air cathode, and comprises a first discharge line 222, which if required can serve as a hydrogen discharge via a valve 223. A second discharge line of the cathode side 221 of the electrolysis cell 219 is coupled to the second delivery line 207 of the anode side 202 of the fuel cell 201, and serves to conduct hydrogen, which is produced in the electrolysis cell 219, to the fuel cell 201 as fuel. A discharge line 227 of the anode side 220 of the electrolysis cell 219 is coupled to a second heat exchanger 228, which exhibits a gas discharge line 229, which is coupled via a third heat exchanger 230 and a pump 231 to an outlet, via which oxygen can be conducted to the pressurised cabin. The second heat exchanger 228 serves to provide an oxygen/water separation of the water/oxygen mixture on the anode side 220 of the electrolysis cell 219. A water discharge line 232 of the second heat exchanger 228 is coupled via a circulation pump 233 and a valve 234 to an intake on the anode side 220 of the electrolysis cell 219. Furthermore, the second heat exchanger 228 exhibits a water intake 235, which is coupled via a valve 236, a pump 237, and a further valve 238, to an outlet of the storage tank 214. The outlet of the storage tank 214 is further connected via a valve 239 and a pump 240 to a drinking water system of the aircraft.

Furthermore, the fuel cell system 200 comprises a cooling circuit 241 with a cooler 242, which is in connection with air outside the aircraft. The cooling circuit 241 serves to cool the first heat exchanger 212, the second heat exchanger 228, the third heat exchanger 230, and the fuel cell 201.

Represented in Fig. 2 are a number of delivery and discharge lines for the fuel cell system 200, shown diagrammatically as arrows. Discharge line 260 represents a water discharge and delivery line 261 represents a cabin air inlet for the cathode side of the fuel cell, while delivery line 262 characterises a hydrogen infeed for the anode side of the fuel cell. Furthermore, discharge line 263 represents in diagrammatic form a hydrogen discharge, by which, if required, hydrogen can be conducted from the cathode side of the electrolysis cell. Discharge line 264 represents a drinking water outlet by which water can be conducted from the buffer tank 214 to the drinking water system of the aircraft. Discharge line 265 represents diagrammatically an outlet, by which oxygen, which is produced in the electrolysis cell, can be conducted to the air-conditioning system of the aircraft. Discharge lines 266 represent discharge lines by which, if required, discharge air can be conducted from the cathode side of the fuel cell overboard of the aircraft. Finally, delivery lines 267 represent in diagrammatic form delivery lines by which ambient air can be conducted to the cooling circuit 241.

The function of the fuel cell system from Fig. 2 is similar to that of the fuel cell system from Fig. 1. Accordingly, hereinafter consideration is given only briefly of the differences in the fuel cell system 200.

One substantial difference between the fuel cell system 200 in Fig. 2 in comparison with the fuel cell system 100 in Fig. 1 lies in the fact that the cathode side of the electrolysis cell is coupled to the anode side of the fuel cell. As a result, it is possible for the hydrogen produced in the electrolysis cell can be conducted to the fuel cell for the production of energy, as a result of which the external hydrogen requirement of the fuel cell can be reduced. In order to be able to ensure further that air of adequate humidity is available to the cathode side of the fuel cell, the fuel cell system 200 from Fig. 2 exhibits the additional moisture-heat exchanger 250, by which a part of the water produced in the fuel cell is again conducted to the intake air of the cathode side of the fuel cell. The remaining water portion is condensed out as in the embodiment example from Fig. 1. Furthermore, in the embodiment example of Fig. 2, cabin air is not provided to the cathode side of the electrolysis side, as is the case in the embodiment example from Fig. 1, but the cabin air is conducted via the moisture-heat exchanger to the cathode side of the fuel cell. The cathode side of the electrolysis cell in the embodiment example from Fig. 2, however, does not comprises any delivery lines at all, but two discharge lines, whereby one is used to conduct hydrogen to the anode side of the fuel cell, while by contrast the second discharge line serves, if required, to conduct away any surplus hydrogen.

By way of supplement, reference should be made to the fact that "comprising" does not exclude any other elements or steps, and "a" or "one" does not exclude the plural. Reference may also be made to the fact that features or steps which have been described with reference to one of the foregoing exemplary embodiment can also be used in combination with other features or steps of other exemplary embodiment described heretofore. Reference signs in the claims are not to be regarded as restrictive.

## Claims

1. A fuel cell system (100, 200) for the supply of a vehicle with drinking water and oxygen, said fuel cell system (100, 200)comprising:
a fuel cell (101, 201); and
an electrolysis cell (119, 219),
wherein the electrolysis cell (119, 219)comprises an air cathode and is coupled to the fuel cell (101, 201), and
wherein the fuel cell (101, 201) and the electrolysis cell (119, 219) are designed in such a way that a power requirement of the electrolysis cell (119, 219) is covered by a power delivered from the fuel cell (101, 201).

2. The fuel cell system (100) according to claim 1,
wherein the fuel cell (101) comprises an anode side (102) and a cathode side (103),
wherein the electrolysis cell (119) comprises an anode side (120) and a cathode side (121), and
wherein the cathode side (121) of the electrolysis cell (119) is coupled to the cathode side (103) of the fuel cell (101).

3. The fuel cell system (100) according to claim 2,
wherein the electrolysis cell (119) is designed in such a way that air from a cabin of the aircraft is conductable to its cathode-side.

4. The fuel cell system (200) according to claim 1,
wherein the fuel cell (201) comprises an anode side (202) and a cathode side (203),
wherein the electrolysis cell (219) comprises an anode side (220) and a cathode side (221), and
wherein the cathode side (221) of the electrolysis cell (219) is coupled to the anode side (203) of the fuel cell (201).

5. The fuel cell system (200) according to claim 4,
wherein the fuel cell (201) is designed in such a way that air from a cabin of the aircraft is conductable to its cathode-side.

6. The fuel cell system (100, 200) according to one of claims 2 to 5,
wherein the fuel cell (101, 201) is designed in such a way that hydrogen or reformate gas is conductable to it on the anode side.

7. The fuel cell system (100, 200) according to one of claims 2 to 6, further comprising:
a heat exchanger (113, 213),
wherein the heat exchanger (113, 213) is designed in such a way that it cools air discharged from the cathode side (103, 203) of the fuel cell (101, 201).

8. The fuel cell system (100, 200) according to one of claims 2 to 7, further comprising:
an additional heat exchanger (128, 228),
wherein the additional heat exchanger (128, 228) is designed in such a way that it cools the water/oxygen mixture discharged from the anode side (120, 220) of the electrolysis cell (119, 219).

9. The fuel cell system (100, 200) according to one of claims 1 to 8, further comprising:
a cooling circuit (141, 241),
wherein the cooling circuit (141, 241) is coupled to the fuel cell (101, 201) in such a way that it cools the fuel cell (101, 201).

10. The fuel cell system (100, 200) according to one of claims 1 to 9,
wherein the fuel cell (101, 201) is a low-temperature fuel cell.

11. The fuel cell system (100, 200) according claim 10,
wherein the low-temperature fuel cell (101, 201) is a proton exchange membrane fuel cell.

12. The fuel cell system (100, 200) according to one of claims 1 to 9,
wherein the fuel cell (101, 201) is a high-temperature PEM fuel cell.

13. The fuel cell system (100, 200) according to claim 12,
wherein the high-temperature PEM fuel cell (101, 201) is a proton exchange membrane fuel cell.

14. The fuel cell system (100, 200) according to one of claims 1 to 13,
wherein the electrolysis cell (119, 219) is a polymer membrane electrolysis cell with catalyst.

15. The fuel cell system (100, 200) according to one of claims 1 to 13,
wherein the electrolysis cell (119, 219) is not a polymer membrane electrolysis cell with catalyst, and
wherein the electrolysis cell (119, 219) is arranged in such a way it is adjusted in a temperature range to the fuel cell.

16. The fuel cell system (100, 200) according to one of claims 1 to 15,
which further comprises a plurality of fuel cells and a plurality of electrolysis cells.

17. The fuel cell system (100, 200) according to one of claims 1 to 16,
wherein the fuel cell (101, 201) and the electrolysis cell (119, 219) are connected to form a stack, and
wherein the electrolysis cell (119, 219) is supplied with power directly from the fuel cell (101, 201).

18. The fuel cell system (100, 200) according to one of claims 1 to 17,
wherein a power ratio between the fuel cell (101, 201) and the electrolysis cell (119, 219) is selected in such a way that a power delivery from the fuel cell (101, 201) corresponds precisely to a power requirement of the electrolysis cell (119, 219).

19. The fuel cell system (100, 200) according to one of claims 1 to 17,
wherein a power ratio between the fuel cell (101, 201) and the electrolysis cell (119, 219) is selected in such a way that a power delivery from the fuel cell (101, 201) corresponds precisely to a power requirement of the electrolysis cell (119, 219) and of all required ancillary devices of the fuel cell system (100, 200).

20. The fuel cell system (100, 200) according to one of claims 1 to 17,
wherein a power ratio between the fuel cell (101, 201) and the electrolysis cell (119, 219) is selected in such a way that a power delivery from the fuel cell (101, 201) is higher than a power requirement of the electrolysis cell (119, 219) and of all required ancillary devices of the fuel cell system (100, 200).

21. The fuel cell system (100, 200) according to claim 20, further comprising:
an inverter, and
a voltage transformer,
wherein the inverter and the voltage converter are designed in such a way that power from the fuel cell (101, 201) can be fed into an onboard network of the vehicle.

22. An aircraft with a fuel cell (100, 200) system according to one of claims 1 to 21.

23. Use of a fuel system (100, 200) according to claims 1 to 21 in an aircraft.

## Patentansprüche

1. Brennstoffzellensystem (100, 200) für die Versorgung eines Fahrzeugs mit Trinkwasser und Sauerstoff, welches Brennstoffzellensystem (100, 200) aufweist:
eine Brennstoffzelle (101, 201); und
eine Elektrolysezelle (119, 219),
wobei die Elektrolysezelle (119, 219) eine Luftkathode aufweist und mit der Brennstoffzelle (101, 201) gekoppelt ist, und
wobei die Brennstoffzelle (101, 201) und die Elektrolysezelle (119, 219) derart eingerichtet sind, dass ein Leistungsbedarf der Elektrolysezelle (119, 219) durch eine Leistungsabgabe der Brennstoffzelle (101, 201) abgedeckt ist.

2. Brennstoffzellensystem (100) gemäß Anspruch 1,
wobei die Brennstoffzelle (101) eine Anodenseite (102) und eine Kathodenseite (103) aufweist,
wobei die Elektrolysezelle (119) eine Anodenseite (120) und eine Kathodenseite (121) aufweist, und
wobei die Kathodenseite (121) der Elektrolysezelle (119) mit der Kathodenseite (103) der Brennstoffzelle (101) gekoppelt ist.

3. Brennstoffzellensystem (100) gemäß Anspruch 2,
wobei die Elektrolysezelle (119) derart eingerichtet ist, dass Luft aus einer Kabine des Luftfahrzeugs ihrer Kathodenseite zuleitbar ist.

4. Brennstoffzellensystem (200) gemäß Anspruch 1,
wobei die Brennstoffzelle (201) eine Anodenseite (202) und eine Kathodenseite (203) aufweist,
wobei die Elektrolysezelle (219) eine Anodenseite (220) und eine Kathodenseite (221) aufweist, und
wobei die Kathodenseite (221) der Elektrolysezelle (219) mit der Anodenseite (203) der Brennstoffzelle (201) gekoppelt ist.

5. Brennstoffzellensystem (200) gemäß Anspruch 4,
wobei die Brennstoffzelle (201) derart eingerichtet ist, dass Luft aus einer Kabine des Luftfahrzeugs ihrer Kathodenseite zuleitbar ist.

6. Brennstoffzellensystem (100, 200) gemäß einem der Ansprüche 2 bis 5, wobei die Brennstoffzelle (101, 201) derart eingerichtet ist, dass Wasserstoff oder ein Reformatgas ihrer Anodenseite zuleitbar ist.

7. Brennstoffzellensystem (100, 200) gemäß einem der Ansprüche 2 bis 6, ferner aufweisend:
einen Wärmetauscher (113, 213),
wobei der Wärmetauscher (113, 213) derart eingerichtet ist, dass er aus der Kathodenseite (103, 203) der Brennstoffzelle (101, 201) abgeleitete Luft kühlt.

8. Brennstoffzellensystem (100, 200) gemäß einem der Ansprüche 2 bis 7 ferner aufweisend:
einen zusätzlichen Wärmetauscher (128, 228),
wobei der zusätzliche Wärmetauscher (128, 228) derart eingerichtet ist, dass er aus der Anodenseite (120, 220) der Elektrolysezelle (119, 219) abgeleitetes Wasser/Sauerstoffgemisch kühlt.

9. Brennstoffzellensystem (100, 200) gemäß einem der Ansprüche 1 bis 8, ferner aufweisend:
einen Kühlkreislauf (141, 241),
wobei der Kühlkreislauf (141, 241) derart mit der Brennstoffzelle (101, 201) gekoppelt ist, dass er die Brennstoffzelle (101, 201) kühlt.

10. Brennstoffzellensystem (100, 200) gemäß einem der Ansprüche 1 bis 9,
wobei die Brennstoffzelle (101, 201) eine Niedrigtemperatur-Brennstoffzelle ist.

11. Brennstoffzellensystem (100, 200) gemäß Anspruch 10,
wobei die Niedrigtemperatur-Brennstoffzelle (101, 201) eine Protonenaustauschmembran-Brennstoffzelle (PEM) ist.

12. Brennstoffzellensystem (100, 200) gemäß einem der Ansprüche 1 bis 9,
wobei die Brennstoffzelle (101, 201) eine Hochtemperatur-PEM-Brennstoffzelle ist.

13. Brennstoffzellensystem (100, 200) gemäß Anspruch 12,
wobei die Hochtemperatur-PEM-Brennstoffzelle (101, 201) eine Protonenaustauschmembran-Brennstoffzelle ist.

14. Brennstoffzellensystem (100, 200) gemäß einem der Ansprüche 1 bis 13,
wobei die Elektrolysezelle (119, 219) eine Polymermembran-Elektrolysezelle mit Katalysator ist.

15. Brennstoffzellensystem (100, 200) gemäß einem der Ansprüche 1 bis 13,
wobei die Elektrolysezelle (119, 219) keine Polymermembran-Elektrolysezelle mit Katalysator ist, und
wobei die Elektrolysezelle (119, 219) derart eingerichtet ist, dass sie in einem Temperaturniveau der Brennstoffzelle angepasst ist.

16. Brennstoffzellensystem (100, 200) gemäß einem der Ansprüche 1 bis 15,
welches ferner eine Mehrzahl von Brennstoffzellen und eine Mehrzahl von Elektrolysezellen aufweist.

17. Brennstoffzellensystem (100, 200) gemäß einem der Ansprüche 1 bis 16,
wobei die Brennstoffzelle (101, 201) und die Elektrolysezelle (119, 219) zu einem Stack verbunden sind, und
wobei die Elektrolysezelle (119, 219) direkt von den Brennstoffzelle (101, 201) mit Energie versorgt wird.

18. Brennstoffzellensystem (100, 200) gemäß einem der Ansprüche 1 bis 17,
wobei ein Leistungsverhältnis zwischen der Brennstoffzelle (101, 201) und der Elektrolysezelle (119, 219) derart gewählt ist, dass eine Leistungsabgabe der Brennstoffzelle (101, 201) genau einem Leistungsbedarf der Elektrolysezelle (119, 219) entspricht.

19. Brennstoffzellensystem (100, 200) gemäß einem der Ansprüche 1 bis 17,
wobei ein Leistungsverhältnis zwischen der Brennstoffzelle (101, 201) und der Elektrolysezelle (119, 219) derart gewählt ist, dass eine Leistungsabgabe der Brennstoffzelle (101, 201) genau einem Leistungsbedarf der Elektrolysezelle (119, 219) und aller erforderlichen Nebenaggregate des Brennstoffzellensystems (100, 200) entspricht.

20. Brennstoffzellensystem (100, 200) gemäß einem der Ansprüche 1 bis 17,
wobei ein Leistungsverhältnis zwischen der Brennstoffzelle (101, 201) und der Elektrolysezelle (119, 219) derart gewählt ist, dass eine Leistungsabgabe der Brennstoffzelle (101, 201) höher als ein Leistungsbedarf der Elektrolysezelle (119, 219) und aller erforderlichen Nebenaggregate des Brennstoffzellensystems (100, 200) ist.

21. Brennstoffzellensystem (100, 200) gemäß Anspruch 20, ferner aufweisend:
einen Inverter, und
einen Spannungsumwandler,
wobei der Inverter und der Spannungsumwandler derart eingerichtet sind, dass Energie der Brennstoffzelle (101, 201) in ein Bordnetz des Fahrzeugs einspeisbar ist.

22. Luftfahrzeug mit einem Brennstoffzellensystem (100, 200) gemäß einem der Ansprüche 1 bis 21.

23. Verwendung eines Brennstoffzellensystems (100, 200) gemäß Anspruch 1 bis 21 in einem Luftfahrzeug.

## Revendications

1. Système de pile à combustible (100, 200) pour alimenter un véhicule en eau potable et en oxygène, ledit système de pile à combustible (100, 200) comprenant :
- une pile à combustible (101, 201) ; et
- une cellule d'électrolyse (119, 219),
dans lequel la cellule d'électrolyse (119, 219) comprend une cathode à air et est couplée à la pile à combustible (101, 201), et
dans lequel la pile à combustible (101, 201) et la cellule d'électrolyse (119, 219) sont conçues de manière à ce que la puissance requise par la cellule d'électrolyse (119, 219) soit couverte par une puissance délivrée par la pile à combustible (101, 201).

2. Système de pile à combustible (100) selon la revendication 1,
dans lequel la pile à combustible (101) comprend un côté anode (102) et un côté cathode (103),
dans lequel la cellule d'électrolyse (119) comprend un côté anode (120) et un côté cathode (121), et
dans lequel le côté cathode (121) de la cellule d'électrolyse (119) est couplé au côté cathode (103) de la pile à combustible (101).

3. Système de pile à combustible (100) selon la revendication 2,
dans lequel la cellule d'électrolyse (119) est conçue de telle manière que l'air d'une cabine de l'aéronef peut être acheminé vers son côté cathode.

4. Système de pile à combustible (200) selon la revendication 1,
dans lequel la pile à combustible (201) comprend un côté anode (202) et un côté cathode (203),
dans lequel la cellule d'électrolyse (219) comprend un côté anode (220) et un côté cathode (221), et
dans lequel le côté cathode (221) de la cellule d'électrolyse (219) est couplé au côté anode (203) de la pile à combustible (201).

5. Système de pile à combustible (200) selon la revendication 4,
dans lequel la pile à combustible (201) est conçue de telle manière que l'air d'une cabine de l'aéronef peut être acheminé vers son côté cathode.

6. Système de pile à combustible (100, 200) selon l'une des revendications 2 à 5,
dans lequel la pile à combustible (101, 201) est conçue de telle manière que de l'hydrogène ou du gaz de reformat peut être acheminé vers elle sur le côté anode.

7. Système de pile à combustible (100, 200) selon l'une des revendications 2 à 6, comprenant en outre :
un échangeur de chaleur (113, 213),
dans lequel l'échangeur de chaleur (113, 213) est conçu de telle manière qu'il refroidit l'air déchargé à partir du côté cathode (103, 203) de la pile à combustible (101, 201).

8. Système de pile à combustible (100, 200) selon l'une des revendications 2 à 7, comprenant en outre :
- un échangeur de chaleur supplémentaire (128, 228),
dans lequel l'échangeur de chaleur supplémentaire (128, 228) est conçu de telle manière qu'il refroidit le mélange eau/oxygène déchargé à partir du côté anode (120, 220) de la cellule d'électrolyse (119, 219).

9. Système de pile à combustible (100, 200) selon l'une des revendications 1 à 8, comprenant en outre :
- un circuit de refroidissement (141, 241),
dans lequel le circuit de refroidissement (141, 241) est couplé à la pile à combustible (101, 201) de telle manière qu'il refroidit la pile à combustible (101, 201).

10. Système de pile à combustible (100, 200) selon l'une des revendications 1 à 9, dans lequel la pile à combustible (101, 201) est une pile à combustible à basse température.

11. Système de pile à combustible (100, 200) selon la revendication 10,
dans lequel la pile à combustible à basse température (101, 201) est une pile à combustible à membrane échangeuse de protons (PEM).

12. Système de pile à combustible (100, 200) selon l'une des revendications 1 à 9, dans lequel la pile à combustible (101, 201) est une pile à combustible PEM à haute température.

13. Système de pile à combustible (100, 200) selon la revendication 12,
dans lequel la pile à combustible PEM à haute température (101, 201) est une pile à combustible à membrane échangeuse de protons.

14. Système de pile à combustible (100, 200) selon l'une des revendications 1 à 13,
dans lequel la cellule d'électrolyse (119, 219) est une cellule d'électrolyse à membrane polymère avec catalyseur.

15. Système de pile à combustible (100, 200) selon l'une des revendications 1 à 13,
dans lequel la cellule d'électrolyse (119, 219) n'est pas une cellule d'électrolyse à membrane polymère avec catalyseur, et
dans lequel la cellule d'électrolyse (119, 219) est agencée de telle manière qu'elle est adaptée dans une plage de température à la pile à combustible.

16. Système de pile à combustible (100, 200) selon l'une des revendications 1 à 15,
qui comprend en outre une pluralité de piles à combustible et une pluralité de cellules d'électrolyse.

17. Système de pile à combustible (100, 200) selon l'une quelconque des revendications 1 à 16,
dans lequel la pile à combustible (101, 201) et la cellule d'électrolyse (119, 219) sont reliées pour former un empilement, et
dans lequel la cellule d'électrolyse (119, 219) est alimentée en énergie directement à partir de la pile à combustible (101, 201).

18. Système de pile à combustible (100, 200) selon l'une des revendications 1 à 17,
dans lequel un rapport de puissance entre la pile à combustible (101, 201) et la cellule d'électrolyse (119, 219) est choisi de telle manière qu'une puissance délivrée de la pile à combustible (101, 201) correspond exactement à une puissance requise par la cellule d'électrolyse (119, 219).

19. Système de pile à combustible (100, 200) selon l'une des revendications 1 à 17,
dans lequel un rapport de puissance entre la pile à combustible (101, 201) et la cellule d'électrolyse (119, 219) est choisi de telle manière qu'une puissance délivrée de la pile à combustible (101, 201) correspond exactement à une puissance requise par la cellule d'électrolyse (119, 219) et l'ensemble des dispositifs auxiliaires nécessaires du système de pile à combustible (100, 200).

20. Système de pile à combustible (100, 200) selon l'une des revendications 1 à 17,
dans lequel un rapport de puissance entre la pile à combustible (101, 201) et la cellule d'électrolyse (119, 219) est choisi de telle manière qu'une puissance délivrée de la pile à combustible (101, 201) est supérieure à une puissance requise par la cellule d'électrolyse (119, 219) et l'ensemble des dispositifs auxiliaires nécessaires du système de pile à combustible (100, 200).

21. Système de piles à combustible (100, 200) selon la revendication 20, comprenant en outre :
- un onduleur, et
- un transformateur de tension,
dans lequel l'onduleur et le transformateur de tension sont conçus de telle manière que la puissance de la pile à combustible (101, 201) peut être distribuée dans un réseau à bord du véhicule.

22. Aéronef avec un système de pile à combustible (100, 200) selon l'une des revendications 1 à 21.

23. Utilisation d'un système d'alimentation (100, 200) selon les revendications 1 à 21 dans un aéronef.
